# EUROPÄISCHE PATENTSCHRIFT

(11) **EP 0 569 939 B1**
(45) Veröffentlichungstag und Bekanntmachung des Hinweises auf die Patenterteilung: **18.03.1998**
(21) Anmeldenummer: 93107655.8
(22) Anmeldetag: 11.05.1993
(51) Int. Cl.: G01N 3/00

(54) **Einrichtung zum Prüfen von Balgfedern, insbesondere für Kraftfahrzeuge und Kraftfahrzeuganhänger, unter betriebsähnlichen Belastungsbedingungen**
Device for testing airsprings, in particular for vehicles and trailers, under loading conditions similar to their working ones
Appareil pour l'essai de ressorts à air, en particulier pour automobiles et remorques dans des conditions de charge semblables à celles de leur utilisation

(30) Priorität: 14.05.1992 DE 4215852
(43) Veröffentlichungstag der Anmeldung: 18.11.1993
(73) Patentinhaber: FRAUNHOFER-GESELLSCHAFT ZUR FÖRDERUNG DER ANGEWANDTEN FORSCHUNG E.V., 80636 München (DE); MAN Nutzfahrzeuge Aktiengesellschaft, 80976 München (DE)
(72) Erfinder: Klock, Jürgen, Dipl.-Ing., W-6111 Otzberg 1 (DE); Grubisic, Vatroslav, Prof. Dr. Ing., W-6107 Reinheim 4 (DE); Fischer, Gerhard, Dr. Ing., W-6100 Darmstadt (DE); Wypich, Peter, Dipl.-Ing., W-8066 Bergkirchen (DE); Streicher, Manfred, Dipl.-Ing., W-8000 München 19 (DE)
(74) Vertreter: Weisert, Annekäte, Dipl.-Ing. Dr.-Ing.

(56) Entgegenhaltungen:
- EP-A- 0 112 400
- EP-A- 0 350 608
- DE-A- 1 573 682
- DE-A- 2 755 793
- DE-U- 9 115 391

## Beschreibung

Die Erfindung betrifft eine Einrichtung zum Prüfen eines ein Federelement umfassenden Bauteils gemäß dem Oberbegriff des Anspruchs 1. Eine solche Einrichtung ist aus der DE 37 10 552 C2 bekannt.

Vorzugsweise ist die erfindungsgemäße Einrichtung zum Prüfen von Luftfedern und Luftfederbälgen für Kraftfahrzeuge, insbesondere für Nutzkraftfahrzeuge und Nutzkraftfahrzeuganhänger, bestimmt, und sie wird nachfolgend unter Bezugnahme auf derartige Luftfedern und Luftfederbälge und deren Problematik bei der Anwendung in Kraftfahrzeugen und Kraftfahrzeuganhängern näher beschrieben und erläutert, wenngleich die Einrichtung nach der Erfindung generell für das Prüfen von Balgfedern unter betriebsähnlichen Belastungsbedingungen geeignet ist, unabhängig davon, ob diese Balgfedern mit Luft oder einem anderen Gas oder mit einer Hydraulikflüssigkeit als Druckmittel betrieben werden, sowie auch unabhängig davon, ob die Balgfedern in Kraftfahrzeugen und Kraftfahrzeuganhängern oder auf anderen Gebieten der Technik, wie beispielsweise in Baumaschinen, Werkzeugmaschinen, Industrierobotern o.dgl. angewandt werden.

Wichtig ist die erfindungsgemäße Einrichtung vor allem zum Prüfen von Balgfedern, die bei ihrer Anwendung laufenden und starken Belastungen der Art ausgesetzt sind, daß sie außer den normalen Verformungen, die sich durch eine einfache axiale Ein- und Ausfederung der Balgfedern ergeben, mehr oder weniger komplizierten Zusatzverformungen, wie insbesondere Verwindungen und/oder Relativverlagerungen der axialen Enden quer zur Achse der Balgfedern, ausgesetzt sind, wobei die Verformungen durch hochfrequente, mittelfrequente und/oder niederfrequente Bewegungen bedingt und unter unterschiedlichen klimatischen Bedingungen, insbesondere der Temperatur und/oder der Luftfeuchtigkeit, erfolgen können.

Es sei nun näher auf die Problematik der Luftfedern in Nutzkraftfahrzeugen und Nutzkraftfahrzeuganhängern eingegangen, von welcher bei der Entwicklung der erfindungsgemäßen Einrichtung zum Prüfen von Balgfedern unter betriebsähnlichen Belastungsbedingungen zunächst ausgegangen worden ist:

Luftfedern dienen in Kraftfahrzeugen und Kraftfahrzeuganhängern zum Abfedern von vertikalen Stößen, die durch Fahrbahnunebenheiten hervorgerufen werden. Dadurch unterliegen die Luftfedern, die vor allem an Achsen und Lenkerelementen sowie Rahmenteilen des Kraftfahrzeugs und Kraftfahrzeuganhängers angeordnet sind, hochfrequenten Vertikalbewegungen.

Aufgrund der kinematischen Verhältnisse der Lenker- und Achsgeometrie ergeben sich in mehreren Richtungen, vorliegend vor allem in der Längs- und Seitenrichtung des Kraftfahrzeugs und Kraftfahrzeuganhängers, außer den normalen vertikalen Ein- und Ausfederungsbewegungen zusätzliche Winkelbewegungen, die von den Luftfederbälgen ausgeglichen werden müssen und mehr oder weniger komplizierte Zusatzverformungen der Luftfederbälge zusätzlich zu den normalen Ein- und Ausfederungsverformungen bewirken.

Weiterhin kommt es, da der Druck im Inneren der Luftfeder durch einen vom Kraftfahrzeugmotor betriebenen Luftkompressor erzeugt wird, in Stillstandszeiten des Kraftfahrzeugs, in denen keine Druckluft zur Verfügung steht, zu einem Absenken des Kraftfahrzeugs und zu starken Eindrückungen des Luftfederbalgs. Darüberhinaus kommt es beim und kurz nach dem Anfahren des Kraftfahrzeugs zu zusätzlichen Beanspruchungen der Luftfedern, da der Luftfederbalg hierbei erst allmählich mit Luft gefüllt wird, so daß infolgedessen eine bestimmte Anzahl dynamischer Vertikalbewegungen bei noch nicht mit vollem Luftdruck gefülltem Luftfederbalg auftreten können.

Die Prüffrequenz hat bei Luftfedern aus Elastomeren einen anderen Einfluß auf die Schädigung als bei Stahlfedern. Die im Fahreinsatz auftretenden Einfedergeschwindigkeiten müssen daher bei der Prüfung berücksichtigt werden.

Neben diesen, aus den Fahrmanövern des Kraftfahrzeugs entstehenden Verformungen und Beanspruchungen der Luftfedern können Umwelteinflüsse, wie hohe oder niedrige Außentemperaturen und starke Feuchtigkeit oder Trockenheit zu einer vorzeitigen Schädigung und/oder Alterung der Luftfedern führen.

Es ist daher von hoher betriebs-, sicherheits- und entwicklungstechnischer Wichtigkeit, die Gebrauchslebensdauer von Balgfedern, insbesondere von Luftfedern für Kraftfahrzeuge und Kraftfahrzeuganhänger, ermitteln zu können.

Wie bereits eingangs erwähnt, ist aus der DE 37 10 552 C2 eine Einrichtung gemäß dem Oberbegriff des Anspruchs 1 bekannt. Bei dieser Einrichtung handelt es sich um eine Prüfmaschine für die Untersuchung der Schwingfestigkeit einzelner Schraubenfederwindungen. In dieser Prüfmaschine, mit der keine komplette Feder geprüft wird, sondern nur einzelne Schraubenfederwindungen einer Prüfbelastung unterworfen werden, sind zwei einzelne Schraubenfederwindungen auf einer Wippe angebracht, die aus zwei Schwingarmen besteht, von denen der eine an seiner Lagerstelle angetrieben wird, während der andere Schwingarm automatisch gegenphasig schwingt. Infolgedessen bewegen sich die Enden der einzelnen Schraubenfederwindungen in einer Ebene auf einem Kreisbogen, und es können nur sehr beschränkte Prüfungen durchgeführt werden, die nicht nur hinsichtlich des Bewegungsweges der Schraubenfederwindungen beschränkt sind, sondern auch bezüglich der Belastungsarten. Denn diese Prüfmaschine arbeitet auf Resonanzbasis mit elektrodynamischem Antrieb, indem das aus den beiden Schwingarmen und den beiden einzelnen Schraubenfederwindungen bestehende Schwingungssystem so zu Schwingungen erregt wird, daß es in seiner ersten Eigenform im Resonanzmaximum schwingt, wobei die Belastung und die Prüf- bzw. Eigenfrequenz jeweils fest eingestellt werden. Es sind daher keine während des Prüfbetriebs variablen Vorspannungen anwendbar und keine zufallsartigen Belastungen in einem variablen Frequenzbereich möglich, so daß eine Prüfung unter betriebsähnlichen Belastungsbedingungen mit der Prüfmaschine nach der DE 37 10 552 C2 unmöglich ist.

Weiter ist aus der Firmenschrift P2430 der Firma Schenck Trebel GmbH "Elektro-mechanische Prüfmaschinen RM" eine elektromechanische Prüfmaschine bekannt, welche neben Standard-Zug- und Druckversuchen an Metallen und Kunststoffen auch "komplexe Untersuchungen an Motoraufhängungen unter Zug-/Torsion- und Druck-/Torsionsbeanspruchung" erlaubt. Hierbei erfolgt die Prüfung unter Torsionsbeanspruchung um die Achse des zu prüfenden Teils senkrecht zur Belastungsrichtung, so daß das betreffende Ende dieses Teils eine kreisbogenförmige Bewegung ausführt, während das andere Ende eingespannt ist. Eine Prüfung von Balgfedern unter betriebsähnlichen Belastungsbedingungen ist mit dieser Prüfmaschine nicht möglich.

Aus US 4 539 845 ist eine Prüfeinrichtung zur Ausführung von Ermüdungstests an mechanischen Komponenten bekannt, in welcher die zu prüfende mechanische Komponente zwischen zwei massiven Armen angebracht wird, von denen der eine durch einen elektromagnetischen Vibrator in Vibration versetzt wird. Die zu prüfende Komponente wird auf diese Weise nur in einer Ebene durch eine Kreisbogenbewegung beansprucht. Auch diese Prüfeinrichtung ist in keiner Weise für eine Prüfung von Balgfedern unter betriebsähnlichen Belastungsbedingungen geeignet.

Außerdem ist es nach der ATZ Automobiltechnische Zeitschrift 90 (1988) 4, S. 165-174, bekannt, die Schwingfestigkeitsprüfung normaler Bauteile und Werkstoffproben auf Resonanzmaschinen oder auf servohydraulischen Prüfmaschinen durchzuführen. Im einzelnen wird hier die Schwingfestigkeitsprüfung von Personenwagen-Achsfedern mit einer Federprüfmaschine beschrieben, die so aufgebaut ist, daß die darin eingespannten Schraubenfedern einer linearen Verformung mittels einer sinusförmigen Belastung unterworfen werden, wobei der lineare Verformungshub für jeden einzelnen Testversuch konstant ist. Diese Federprüfmaschine ermöglicht keine Anwendung von zufallsartigen Belastungen und ist für eine Prüfung der Federn unter betriebsähnlichen Belastungsbedingungen nicht geeignet.

In der ATZ Automobiltechnische Zeitschrift 93 (1991) 2, S. 90-94, ist die Luftfederung eines Prüfstandfundaments beschrieben, in der Luftfedern mit Höhenregelventil vorgesehen sind, um die Arbeitshöhe des Prüfstandfundaments innerhalb der konstruktiv gegebenen Grenzen verändern zu können.

Darüber hinaus sind aus der DE-OS 25 22 890 ein Verfahren und eine hydraulische Prüfeinrichtung zur Durchführung von Resonanzprüfungen bekannt, mit denen u.a. Schraubenfedern geprüft werden können. In dieser Resonanz-Prüfeinrichtung erfolgt die Prüfung mit linearem Federweg und bei dynamischer Belastung in konstanten Grenzen. Eine solche Prüfung, wie sie hier durchgeführt wird, ist bei Balgfedern wegen der großen Einfederungswege und der geringen Federsteifigkeit nicht möglich.

Außerdem ist aus "Strength of Materials", Bd. 5, Nr. 6, S. 710-712, Juni 1973 (Publikation März 1974) ein elektromagnetischer Resonanzerreger für Materialproben bekannt, der aus den gleichen Gründen, die vorstehend zu der DE-OS 25 22 890 angegeben sind, nicht für die Prüfung von Balgfedern geeignet ist.

Schließlich ist aus der DE 37 09 141 Al und der entsprechenden EP 0 283 657 A2 ein mehraxiales Antriebselement bekannt, das wenigstens zwei Antriebseinheiten zum Erzeugen eines axialen Verschiebungsantriebs umfaßt, von denen die eine Antriebseinheit auf mindestens einem durch die andere Antriebseinheit verschiebbaren Bauteil derart angebracht ist, daß die axialen Verschiebungsrichtungen der Antriebseinheiten quer, insbesondere senkrecht, zueinander verlaufen, wobei wenigstens eine dieser Antriebseinheiten eine pneumatische oder hydraulische Kolben-Zylinder-Einheit umfaßt, in der ein Antriebskolben in einem Zylinder hin- und herverschiebbar angeordnet ist und zusammen mit letzerem einen ersten und zweiten Druckströmungsmittelraum begrenzt, in die und aus denen ein pneumatisches oder hydraulisches Druckströmungsmittel zum Verschieben des Antriebskolbens zu- und abführbar ist.

Darüberhinaus ist aus der EP-A-0 350 608 eine Einrichtung zum Prüfen von Balgfedern unter betriebsähnlichen Bedingungen bekannt, die folgendes aufweist:
- eine Balgfederhalterung zum Haltern des einen Endes einer Balgfeder,
- eine Einspann- und Führungsvorrichtung zum Einspannen des anderen Endes der Balgfeder und zum zwangsweisen Führen desselben längs eines Ein- und Ausfederungsweges, und
- eine Bewegungsvorrichtung zum Hin- und Herbewegen des anderen Endes der Balgfeder längs des durch die Einspann- und Führungsvorrichtung festgelegten Ein- und Ausfederungsweges.

Ausgehend von einer Einrichtung gemäß dem Oberbegriff des Anspruchs 1 und 29 ist es die Aufgabe der Erfindung, diese Einrichtung derart weiterzubilden, daß sie zum Prüfen von Balgfedern geeignet ist und es ermöglicht, die Auswirkungen der in der Praxis auftretenden Belastungen auf die Gebrauchslebensdauer der Balgfeder zu untersuchen und aufgrund der Untersuchungsergebnisse gegebenenfalls neue Balgfedern zu entwickeln, die unter gegebenen betrieblichen Belastungsbedingungen weniger oder keiner vorzeitigen Schädigung und/oder Alterung unterworfen sind.

Diese Aufgabe wird erfindungsgemäß durch die im Kennzeichen des Anspruchs 1 angegebenen Merkmale gelöst.

Auf diese Weise ergibt sich nicht nur ein verhältnismäßig unkomplizierter Aufbau der Einrichtung zum Prüfen von Balgfedern, sondern ein Aufbau, der sich für sehr lang dauernde Prüfungen von Balgfedern unter betriebsähnlichen Belastungbedingungen hervorragend eignet und mit dem relativ leicht sowohl nieder- und mittelfrequente als auch hochfrequente Bewegungen und Verformungen der zu prüfenden Balgfedern bewirkt werden können, womit also die verschiedensten betriebsähnlichen Belastungsbedingungen relativ einfach und leicht sowie unter verhältnismäßig geringer Reibung langdauernd simulierbar sind.

Vorzugsweise ist die nach dem Anspruch 1 ausgebildete erfindungsgemäße Einrichtung in einer oder mehreren der folgenden Weisen verstellbar ausgebildet:
(1) Um die geometrischen Bedingungen des jeweiligen Anwendungsfalls, insbesondere eines Fahrzeugtyps, in dem die zu prüfende Balgfeder in der Praxis eingebaut ist, einstellen zu können, ist die Position der Balgfederhalterung verstellbar, und zwar
   (a) senkrecht zur Dehn- und Kompressionsrichtung sowohl parallel zur Auslenkebene des Längslenkers als auch parallel zur Auslenkebene des Querlenkers, sowie
   (b) gegebenenfalls auch in der Dehn- und Kompressionsrichtung der Balgfeder.
(2) Die Position der ersten und/oder zweiten Auslenkachse ist parallel und/oder senkrecht zur Dehn- und Kompressionsrichtung der Balgfeder verstellbar.
(3) Der erste und/oder zweite Abstand ist veränderbar.

Weiter sind die Auslenkachsen bevorzugt wie folgt ausgerichtet:
(i) die Auslenkachse des Längslenkers ist senkrecht zur Dehn- und Kompressionsachse der Balgfeder ausgerichtet;
(ii) die Auslenkachse des Querlenkers ist ebenfalls senkrecht zur Dehn- und Kompressionsrichtung der Balgfeder ausgerichtet; und
(iii) die Auslenkachse des Längslenkers und des Querlenkers sind senkrecht zueinander ausgerichtet.
In einer ersten Ausführungsform der gemäß dem Anspruch 1 ausgebildeten erfindungsgemäßen Einrichtung ist der Längslenker und der Querlenker jeweils ein Federstab, der an seinem einen Ende, d.h. an seiner Auslenkachse, fest eingespannt ist.

In einer anderen Ausführungsform dieser Einrichtung, die besonders bevorzugt wird, ist der Längslenker um die erste Auslenkachse und der Querlenker um die zweite Auslenkachse verschwenkbar, so daß also in diesem Falle der Längslenker und der Querlenker jeweils Hebelarme bilden, deren Auslenkachsen Drehachsen sind. In diesem Falle sind der Längslenker und der Querlenker starr an der Balgfeder befestigt.

In der vorstehend angegebenen erfindungsgemäßen Einrichtung führen der Längs- und der Querlenker am Befestigungspunkt derselben an der Balgfeder je eine bogenförmige Bewegung um ihre jeweilige Auslenkachse aus. Damit sich diese beiden bogenförmigen Bewegungen zu der gewünschten Mehrfachbogenbewegung überlagern, ist eine entsprechende Auslenkbarkeit des Längs- und Querlenkers quer zur jeweils eigenen bogenförmigen Bewegung des Lenkers erforderlich. Diese, nachstehend als "Überlagerungsauslenkbarkeit" bezeichnete Auslenkbarkeit läßt sich dadurch erreichen, daß der Längs- und Querlenker entsprechend elastisch ausgebildet sind. Eine andere Möglichkeit, die vorliegend bevorzugt wird, besteht darin, daß der Längs- und/oder Querlenker zusätzlich um eine Schwenkachse auslenkbar ist, die senkrecht zur jeweiligen Auslenkachse und zur Längsrichtung des Lenkers verläuft. Eine besonders bevorzugte Verwirklichung dieser Konzeption besteht darin, daß der Längs- und/oder Querlenker je um ein Kugelgelenk auslenkbar ist.

Die Befestigung des Längslenkers und/oder des Querlenkers an der Balgfeder erfolgt vorzugsweise über eine Balgfederhalterung, an welcher das zweite Ende der Balgfeder befestigbar ist.

Weiter ist die erfindungsgemäße Einrichtung hinsichtlich der zur Betätigung des Längs- und Querlenkers vorgesehenen Auslenkvorrichtung so ausgebildet, daß die Auslenkvorrichtung an dem einen der beiden Lenker angreift und den anderen der beiden Lenker über die Befestigungsstelle der beiden Lenker an der Balgfeder oder der vorerwähnten Balgfederhalterung mitbewegt.

Im einzelnen ist die Auslenkvorrichtung vorzugsweise wie folgt ausgebildet:
(1) Die Auslenkvorrichtung ist gelenkig mit dem Längs- oder Querlenker verbunden;
(2) die Position der Auslenkvorrichtung ist längs des Lenkers, an dem sie angreift, verstellbar;
(3) die Auslenkvorrichtung ist oder umfaßt eine servohydraulische oder -pneumatische Kolben-Zylinder-Vorrichtung, die an ihrem einen Ende gelenkig mit dem Längs- oder Querlenker verbunden und an ihrem anderen Ende gelenkig gelagert ist, wobei die Position dieses anderen Endes der Kolben-Zylinder-Vorrichtung vorzugsweise in der Längsrichtung des Lenkers, an dem sie angreift, verstellbar ist.

Um die Balgfedern unter unterschiedlichen betriebsähnlichen Umgebungsbedingungen prüfen zu können, ist die Einrichtung nach der Erfindung vorzugsweise so ausgebildet, daß die Balgfeder in einer Klimatisierungskammer einschließbar ist, deren Temperatur und/oder Luftfeuchtigkeit steuer- oder regelbar ist, so daß die Verformungsbelastungen auf die Balgfeder ausgeübt werden können, während diese bestimmten, beispielsweise extremen, Temperaturen und/oder Luftfeuchtigkeitswerten ausgesetzt ist.

Weiterhin ist die erfindungsgemäße Einrichtung bevorzugt in einer oder mehreren der nachfolgenden Weisen ausgebildet:
(a) Es ist eine Regeleinrichtung zum Regeln des Dehnungs- und Kompressionsgrades der Balgfeder über deren Innendruck vorgesehen, wobei die Regeleinrichtung vorzugsweise ein Regelventil ist, das in Abhängigkeit von dem jeweiligen Auslenkungsgrad der Auslenkvorrichtung regelbar und vorzugsweise mit in der Klimatisierungskammer eingeschlossen ist.
(b) Zum Steuern der erfindungsgemäßen Einrichtung ist ein Steuerrechner für das Ansteuern der Bewegungs- oder Auslenkvorrichtung und gegebenenfalls des Temperaturreglers und/oder Luftfeuchtigkeitsreglers der Klimatisierungskammer und dadurch zur Simulation von in Frequenz und Amplitude betriebsähnlichen Last- und Verformungsabläufen sowie bestimmten Klimabedingungen an der Balgfeder vorgesehen.
(c) Das erwähnte Ansteuern erfolgt mittels Standardprogramm, umfassend zeitliche Original-Belastungsabschnitte von dynamischen, quasistatischen und/oder statischen Belastungen und/oder Temperaturzyklen der Balgfeder.
(d) Zur Simulation und Regelung des Drucks der Balgfeder sind bevorzugt Original-Baugruppen und/oder Steuerelemente, wie sie beim Betrieb der Balgfeder in dem jeweiligen Kraftfahrzeug verwendet werden, vorgesehen, so daß auf diese Weise auch die in der Praxis zur Balgfeder gehörenden Baugruppen und/oder Steuerelemente gleichzeitig mit unter betriebsähnlichen Belastungsbedingungen geprüft werden.

Die Erfindung sei nachfolgend unter Bezugnahme auf die Figuren 1 bis 5 der Zeichnung anhand von bevorzugten Ausführungsformen der erfindungsgemäßen Einrichtung zum Prüfen von Balgfedern unter betriebsähnlichen Belastungsbedingungen näher beschrieben und erläutert; es zeigen:
Figur 1 eine schematische, teilweise perspektivische Darstellung des Aufbaus einer Ausführungsform einer Einrichtung nach der Erfindung, soweit sich dieser Aufbau auf die unmittelbare mechanische Verformung der zu prüfenden Balgfeder bezieht;
Figur 2 eine schematische Darstellung eines Gesamtaufbaus einer Ausführungsform einer Einrichtung nach der Erfindung unter Einschluß einer Klimatisierungskammer und der Steuerungsmittel für die Prüfung der Balgfeder unter längerdauernden betriebsähnlichen Belastungsbedingungen;
Figur 3 Meßdaten, die zur Steuerung einer Einrichtung gemäß den Figuren 1 und 2 auf einer aktuellen Teststrecke aufgenommen worden sind;
Figur 4 ein Beispiel für die Steuerung der erfindungsgemäßen Einrichtung, deren Druck-, Weg- und Kraftansteuerwerte aus Meßdaten der in Figur 3 gezeigten Art gewonnen worden sind; und
Figur 5 eine Darstellung von zusätzlichen Belastungsverläufen für die Balgfeder, die einem Außerbetriebsetzen und Inbetriebsetzen der Balgfeder bei tiefen Temperaturen entsprechen.

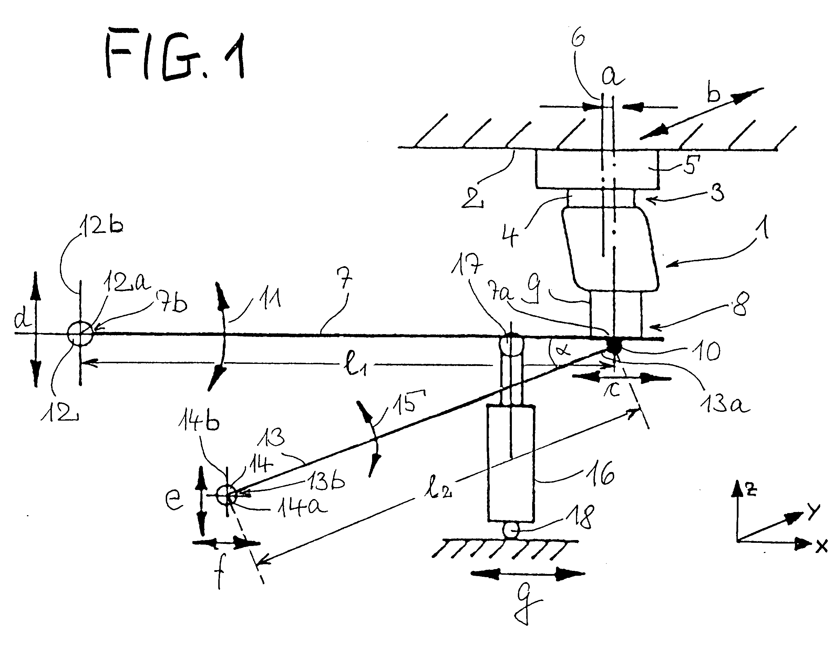

Es sei zunächst unter Bezugnahme auf die Figur 1 eine bevorzugte Ausführungsform einer erfindungsgemäßen Einrichtung zum Prüfen von Balgfedern unter betriebsähnlichen Belastungsbedingungen erläutert, soweit es sich um den Aufbau zur mechanischen Verformungsbelastung einer Balgfeder, die vorliegend eine Luftfeder eines Nutzkraftfahrzeugs ist, handelt, wobei der Gesamtaufbau der Einrichtung schematisch dargestellt ist, indem die Darstellung auf die für das Funktionsprinzip der Einrichtung besonders wichtigen Merkmale konzentriert worden ist, wobei ferner zur Erleichterung des Erläuterns der Einrichtung ein in Figur 1 mit eingezeichnetes kartesisches x-y-z-Koordinatensystem dazu verwendet wird, die Relativanordnung und -einstellbarkeit der einzelnen Komponenten der Einrichtung zueinander in Begriffen dieses Koordinatensystems anzugeben.

Die in Figur 1 gezeigte Einrichtung zum Prüfen einer Balgfeder 1 unter betriebsähnlichen Belastungsbedingungen umfaßt folgende hauptsächliche Komponenten:
(a) Zunächst weist die Einrichtung eine Balgfederhalterung 2 zum Haltern des einen axialen Endes 3 der Balgfeder 1 auf, wobei das Ende 3 über die daran vorgesehene Dichtscheibe 4 und eine Kraftmeßeinrichtung, vorliegend eine Kraftmeßdose 5 an der Balgfederhalterung 2 angebracht ist, die in irgendeiner geeigneten und der Art der Balgfeder 1 angepaßten Weise ausgebildet ist. Hierbei ist die Achse 6 der mit Druckluft aufgeblasenen, aber ansonsten nicht verformten Balgfeder 1, bezogen auf das eingezeichnete kartesische Koordinatensystem, in der z-Richtung ausgerichtet. Die Balgfederhalterung 2 ist, wie bei a dargestellt, in der x-Richtung verstellbar, und außerdem, wie bei b dargestellt, in der y-Richtung. Diese Verstellbarkeit ermöglicht es, die Befestigung der Balgfeder 1 in der der x-Richtung entsprechenden Längsrichtung und in der der y-Richtung entsprechenden Querrichtung so zu verschieben, daß die geometrischen Bedingungen des jeweiligen Fahrzeugtyps, in der die zu prüfende Balgfeder 1 als Luftfeder eingebaut ist, einstellbar sind.
(b) Weiterhin weist die Einrichtung einen Längslenker 7 auf, der eine vorbestimmte Länge l₁ hat und mit seinem einen Ende 7a an dem anderen axialen Ende 8 der Balgfeder 1, das von dem Abrollstempel 9 des Federbalgs gebildet wird, starr befestigt ist, wobei die Befestigungsstelle mit 10 bezeichnet ist. Der Längslenker 7 ist, wie durch den bogenförmigen Doppelpfeil 11 angedeutet, um die vorliegend in der y-Richtung verlaufende Auslenkachse 12a im Sinne einer abwechselnden Dehnung und Kompression der Balgfeder 1 verschwenkbar, und zwar vorliegend in der x-z-Ebene. Gleichzeitig ist der Längslenker 7 um die Schwenkachse 12b auslenkbar, die in der z-Richtung verläuft, also senkrecht zur Auslenkachse 12a und zur Längsrichtung des Lenkers 7. Technisch ist das bevorzugt so ausgeführt, daß der Längslenker 7 um ein Kugelgelenk 12 an seinem anderen Ende 7b verschwenkbar ist.
   Die Befestigungsstelle 10 ist am Längslenker 7 verschiebbar, wie bei c durch einen Doppelpfeil angedeutet ist. Außerdem ist die Auslenkachse 12a bzw. das Kugelgelenk 12 des Längslenkers 7 höhenverstellbar in der z-Richtung, wie durch den Doppelpfeil bei d angedeutet ist.
(c) Darüberhinaus umfaßt die Einrichtung gemäß Figur 1 einen Querlenker 13, der mit seinem einen Ende 13a ebenfalls an dem axialen Ende 8 der Balgfeder 1 über die Befestigungsstelle 10 starr befestigt ist und im Sinne einer abwechselnden Dehnung und Kompression der Balgfeder 1 um eine vorliegend in der x-Richtung verlaufende Auslenkachse 14a verschwenkbar ist, wie durch den bogenförmigen Doppelpfeil 15 dargestellt ist. Der Querlenker 13 hat die Länge l₂ und erstreckt sich vorliegend in der y-Richtung, so daß seine Verschwenkbewegung um die Auslenkachse 14a in der y-z-Ebene erfolgt. Gleichzeitig ist der Querlenker 13 um die Schwenkachse 14b auslenkbar, die in der z-Richtung verläuft, also senkrecht sowohl zur Auslenkachse 14a, als auch zur Längsrichtung des Lenkers 13 ist, wozu die Auslenklagerung des Querlenkers 13 bevorzugt als Kugelgelenk 14 an dem anderen Ende 13b des Querlenkers 13 ausgebildet ist, da ein solches Kugelgelenk diese beiden vorgenannten gleichzeitigen Auslenkungsmöglichkeiten des Lenkers 13 sicherstellt.
   Die Auslenkachse 14a oder das Kugelgelenk 14 ist, wie durch den Doppelpfeil bei e dargestellt, in der z-Richtung verstellbar, und sie bzw. es ist außerdem, wie durch den Doppelpfeil bei f angedeutet, in der y-Richtung verstellbar. Außerdem ist bevorzugt eine Verstellbarkeit in der x-Richtung bzw. eine Verstellbarkeit des Winkels a in der x-y-Ebene zwischen dem Längslenker 7 und dem Querlenker 13, der normalerweise 90° beträgt, vorgesehen.
(d) Schließlich weist die Einrichtung nach Figur 1 als Auslenkvorrichtung 16 zum Auslenken des Längslenkers 7 und des Querlenkers 13 eine servohydraulische Kolben-Zylinder-Vorrichtung auf, die an ihrem einen Ende 17 gelenkig, z.B. durch ein Kugelgelenk, am Längslenker 7 an einer Stelle zwischen der Befestigungsstelle 10 und der Auslenkachse 12 angreift und an ihrem anderen Ende 18 gelenkig. z.B. ebenfalls durch ein Kugelgelenk, am Gestell, Rahmen o.dgl. (nicht gezeigt) der Einrichtung gelagert ist. Diese gelenkige Lagerung am Ende 18 ist, wie durch den Doppelpfeil bei g dargestellt, parallel zur Längsrichtung des Längslenkers 7, also in der x-Richtung verstellbar; sie kann außerdem auch in der y-Richtung verstellbar ausgebildet sein.
   Die Auslenkvorrichtung 16 bewirkt, da die beiden Lenker 7 und 13 an der Befestigungsstelle 10, die vorzugsweise als weitere Balgfederhalterung ausgebildet ist, welche die Lenker 7, 13 mit dem Ende 8 der Balgfeder 1 starr verbindet, so daß die Balgfeder 1 allen Bewegungen der Lenkerenden 7a und 13a zwangsweise folgen muß, gemeinsam mit dem Ende 8 der Balgfeder verbunden sind, ein gleichzeitiges Verschwenken des Längslenkers 7 um dessen Auslenkachse 12a und des Querlenkers 13 um dessen Auslenkachse 14a, wodurch die Befestigungsstelle 10 eine durch die Überlagerung von zwei Bogenbewegungen entstehende Bewegung ausführt, indem zwangsweise gleichzeitig ein Verschwenken des Längslenkers 7 um die Schwenkachse 12b und des Querlenkers 13 um die Schwenkachse 14b bewirkt wird, wobei die eine Bogenbewegung diejenige der Befestigungsstelle 10 um die Auslenkachse 12a und die andere Bogenbewegung diejenige der Befestigungsstelle 10 um die Auslenkachse 14a ist.

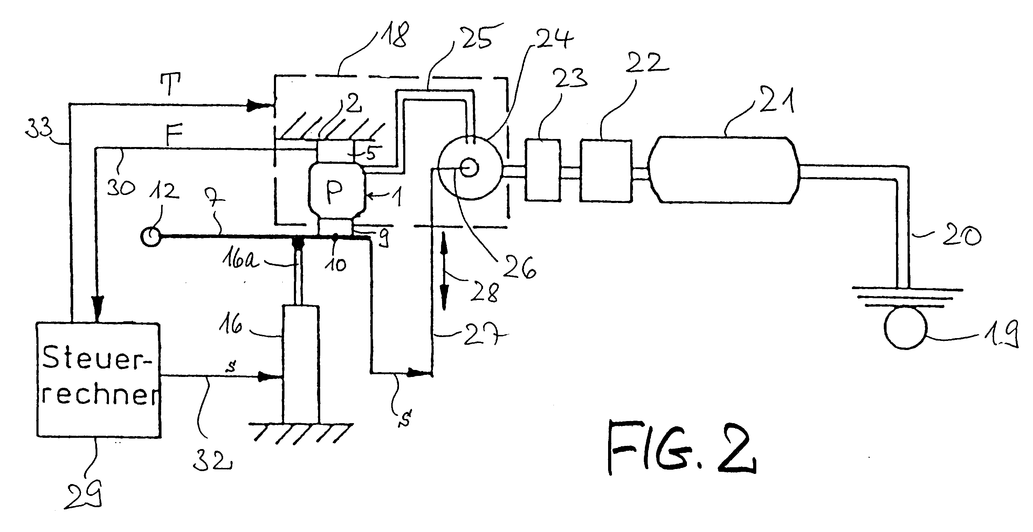

Es sei nun auf die Figur 2 Bezug genommen, worin die Einrichtung der Figur 1, ergänzt durch eine Klimatisierungskammer und eine Steuereinrichtung zum Betrieb derselben ergänzt ist, wobei aus Darstellungsgründen der an sich vorhandene Querlenker 13 in Figur 2 weggelassen ist.

Nach Figur 2 ist die Balgfeder 1 in einer Klimatisierungskammer 18 einschließbar, deren Temperatur und/oder Luftfeuchtigkeit steuer- oder regelbar ist.

Zum Erzeugen und Regeln des Innendrucks in der Balgfeder 1, die vorliegend eine zu prüfende Luftfeder eines Nutzkraftfahrzeugs ist, ist folgende Anordnung vorgesehen:

Es ist ein Luftkompressor 19 vorgesehen, dessen Druckluftausgang über eine Druckluftleitung 20 mit einem Drucklufttank 21 verbunden ist. Der Ausgang des Drucklufttanks 21 ist über einen Luftdruckregler 22 und einen Druckluftkessel 23 mit einer Regeleinrichtung in der Form eines Regelventils 24 verbunden. Das Regelventil 24 ist ein sogenanntes mechanisches oder elektrisches Höhenregelventil, und sein Ausgang ist über eine Druckluftleitung 25 mit dem Inneren der Balgfeder 1 verbunden. Dieses Regelventil 24 ist mit in der Klimatisierungskammer 18 untergebracht.

Das Verstellorgan 26 des Regelventils 24 ist über eine Regelstange 27 mit der Befestigungsstelle 10 so verbunden, daß, wie durch den Doppelpfeil 28 angedeutet, das Verstellorgan 26 in Abhängigkeit von dem Weg s der Befestigungsstelle 10, welche durch die als Kolben-Zylinder-Vorrichtung ausgebildete Auslenkvorrichtung 16 verstellt wird, verstellt wird.

Zum Ansteuern der Einrichtung ist ein Steuerrechner 29 vorgesehen, der über eine Verbindung 30 als eine seiner Eingangsgrößen die an der Kraftmeßeinrichtung 5 gemessene Kraft F erhält. Der Steuerrechner steuert über die Verbindung 32 den Weg, den die Kolbenstange 16a der Auslenkvorrichtung 16 ausgefahren oder eingefahren werden soll, damit die Befestigungsstelle 10 den Weg s zurücklegt. Außerdem steuert der Steuerrechner 29 über die Verbindung 33 die Temperatur T und/oder die Luftfeuchtigkeit der Klimatisierungskammer 18.

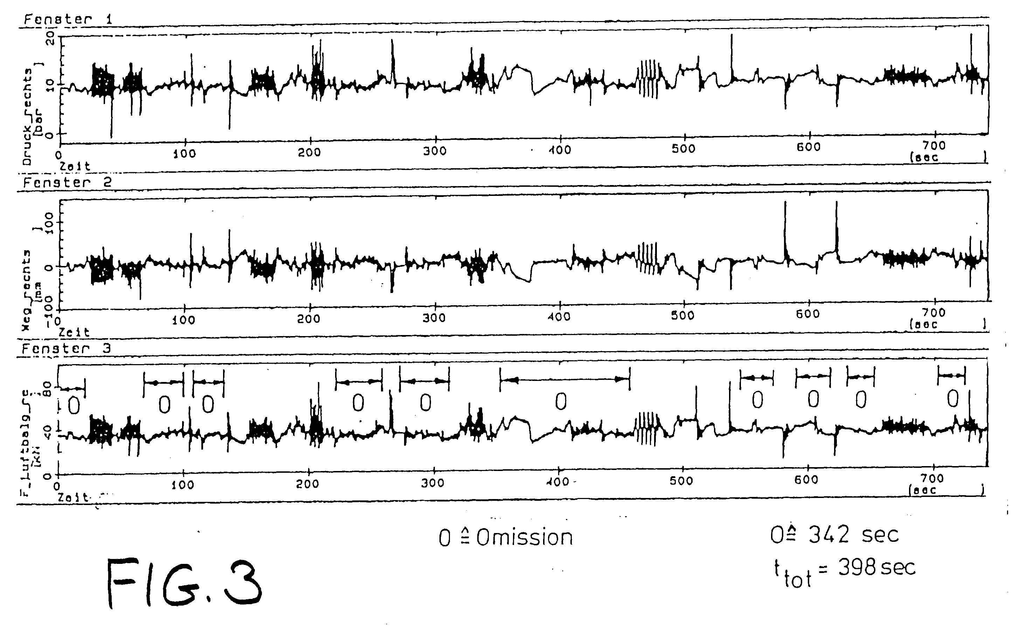

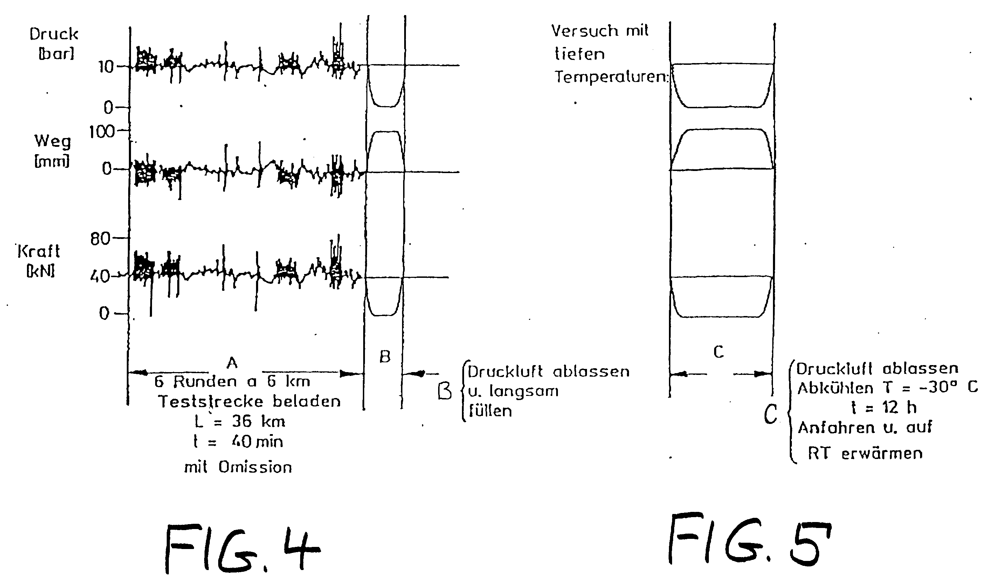

Die Sollwerte des Drucks P in der Balgfeder 1, des Wegs s und der Kraft F erhält der Steuerrechner 29 durch ein Standardprogramm, wie es in einem Beispiel in Figur 4 dargestellt ist, welches aufgrund von Meßdaten erstellt wird, die auf einer Teststrecke gewonnen werden und beispielsweise in Figur 3 veranschaulicht wird.

Zu Vergleichs- und/oder Regelzwecken ("weiches" System) kann dem Steuerrechner über eine nicht dargestellte Verbindung der tatsächlich durchlaufene Weg des Kolbens 16a zugeführt werden.

Die Funktionsweise der Steuerung, wie sie bei der Einrichtung gemäß Figur 2 erfolgt, ist folgende:
Das Höhenregelventil 24 reguliert quasistatische Federbewegungen der Balgfeder 1 nach und wird durch den Weg s der Auslenkvorrichtung 16 gesteuert. Der dynamische Weg s der Auslenkvorrichtung 16 bzw. die Kraft F, welche auf die Balgfeder 1 ausgeübt wird, wird durch den Steuerrechner 29 entsprechend den am Testfahrzeug ermittelten Einfederwegen simuliert. Die in der Klimatisierungskammer 18 angeordnete Balgfeder 1 sowie das Höhenregelventil 24 werden mit Zyklen der Temperatur T beaufschlagt, die ebenfalls über den Steuerrechner 29 simuliert werden.

Die Figur 4 zeigt den Ablauf eines beispielsweisen Standardprogramms, das aus drei Abschnitten besteht:
- Abschnitt A:: dynamische Belastung durch entsprechende Vertikalkrafteinfederung der Balgfeder
- Abschnitt B:: quasistatische Belastung mit Ablassen der Druckluft, Verharrungszustand ohne Druckluft in der Balgfeder, und Füllen der Balgfeder wieder mit Druckluft,
- Abschnitt C:: dieser Abschnitt ist wie der Abschnitt B, erfolgt jedoch jedoch bei tiefer Temperatur.

In den Figuren 4 und 5 sind Beispiele für ein derartiges Standardprogramm angegeben, um die Art und Weise des Standardprogramms hierdurch zu illustrieren. Außerdem sind, wie bereits erwähnt, in Figur 3 Beispiele für Meßdaten angegeben, die auf einer MAN-Teststrecke von ca. 6 km mit einem beladenen Nutzfahrzeug ermittelt worden sind, dessen Gesamtgewicht 24.080 kg betrug, wobei die Vorderachse mit 7.750 kg belastet war.

Die erfindungsgemäße Einrichtung zum Prüfen von Balgfedern unter betriebsähnlichen Belastungsbedingungen ermöglicht insbesondere folgendes:
(a) Simulation der dynamischen und statischen Verformungen an Balgfedern, insbesondere Luftfederbälgen, und zwar unter Einbeziehung von Vertikaleinfederungen und Winkelbewegungen in Längs- und Querrichtung;
(b) eine universelle, variable Anpassung aller Anlenkungspunkte der Balgfeder, insbesondere Luftfeder, an die geometrischen Bedingungen des jeweiligen Fahrzeugs, insbesondere der Längsanlenkung zur Simulation der in Längsrichtung auftretenden Winkelbewegungen und der Quer- oder Seitenanlenkung zur Simulation der in Quer- oder Seitenrichtung auftretenden Winkelbewegungen;
(c) Simulation von in Frequenz und Amplitude wirklichkeitsnahen Last- und Verformungsverläufen;
(d) Simulation und Regelung des Innendrucks der Balgfeder, insbesondere der Druckluft in der Luftfeder, wobei die Original-Baugruppen und Original-Steuerelemente verwendet und auf diese Weise mitgeprüft werden können; und
(e) Ansteuerung mit Standardprogramm, bestehend aus OriginalBelastungsabschnitten von dynamischen, quasistatischen und statischen Belastungen und Temperaturzyklen.

## Patentansprüche

1. Einrichtung zum Prüfen eines ein Federelement umfassenden Bauteils mit zwei Enden unter betriebsähnlichen Belastungsbedingungen mit
(a) einem Rahmen oder Gestell,
(b) einer an dem Rahmen oder Gestell befestigten Halterung zum Haltern des ersten Endes des Bauteils,
(c) einer Einspann- und Führungsvorrichtung zum Einspannen des zweiten Endes des Bauteils und zum zwangsweisen Führen desselben längs eines nichtlinearen Ein- und Ausfederungswegs, und
(d) einer Bewegungsvorrichtung zum Hin- und Herbewegen des zweiten Endes des Bauteils längs des durch die Einspann- und Führungsvorrichtung festgelegten nichtlinearen Ein- und Ausfederungsweges,
dadurch **gekennzeichnet,** daß das ein Federelement umfassende Bauteil eine Balgfeder (1) ist und die Einspann- und Führungsvorrichtung (7, 10, 13) folgendes umfaßt:
(1) einen Längslenker (7), der an dem zweiten Ende (8) der Balgfeder (1) befestigbar und im Sinne einer Dehnung der Balgfeder (1) um eine erste Auslenkachse (12a), die einen vorbestimmten ersten Abstand (l₁) von dem zweiten Ende (8) der Balgfeder (1) hat, auslenkbar ist; und
(2) einen Querlenker (13), der ebenfalls an dem zweiten Ende (8) der Balgfeder (1) befestigbar und im Sinne einer Dehnung der Balgfeder (1) um eine zweite Auslenkachse, (14a), die einen vorbestimmten zweiten Abstand (l₁) von dem zweiten Ende (8) der Balgfeder (1) hat, auslenkbar ist, wobei die Auslenkachsen (12a, 14a) des Längs- und Querlenkers (7, 13) nichtparallel zueinander sind;
wobei außerdem der Längslenker (7) und der Querlenker (13) jeweils quer, vorzugsweise senkrecht, zu der durch seine Bewegung um seine Auslenkachse (12a bzw. 14a) definierten Ebene auslenkbar sind und wobei die Bewegungsvorrichtung eine Auslenkvorrichtung (16) zum Auslenken des Längs- und Querlenkers (7, 13) um deren Auslenkachsen (12a, 14a) ist.

2. Einrichtung nach Anspruch 1, dadurch **gekennzeichnet**, daß die Position der ersten oder zweiten Auslenkachse (12a, 14a) parallel oder senkrecht zur Dehn- und Kompressionsrichtung der Balgfeder (1) verstellbar ist.

3. Einrichtung nach Anspruch 1 oder 2, dadurch **gekennzeichnet,** daß der erste und/oder zweite Abstand (l₁, l₂) veränderbar ist.

4. Einrichtung nach Anspruch 1, 2 oder 3, dadurch **gekennzeichnet**, daß die Position der Balgfederhalterung (2) verstellbar ist.

5. Einrichtung nach einem der Ansprüche 1 bis 4, dadurch **gekennzeichnet,** daß die Auslenkachse (12a) des Längslenkers (7) senkrecht zur Dehn- und Kompressionsachse der Balgfeder (1) ausgerichtet ist.

6. Einrichtung nach einem der Ansprüche 1 bis 5, dadurch **gekennzeichnet,** daß die Auslenkachse (14a) des Querlenkers (13) senkrecht zur Dehn- und Kompressionsrichtung der Balgfeder (1) ausgerichtet ist.

7. Einrichtung nach einem der Ansprüche 1 bis 6, dadurch **gekennzeichnet**, daß die erste und zweite Auslenkachse (12a, 14a) senkrecht zueinander ausgerichtet sind.

8. Einrichtung nach einem der Ansprüche 1 bis 7, dadurch **gekennzeichnet,** daß die Position der Balgfederhalterung (2) senkrecht zur Dehn- und Kompressionsrichtung der Balgfeder (1) und parallel zur Auslenkebene des Längslenkers (7) oder parallel zur Auslenkebene des Querlenkers (13) verstellbar ist.

9. Einrichtung nach einem der Ansprüche 1 bis 8, dadurch **gekennzeichnet,** daß die Position der Balgfederhalterung (2) in der Dehn- und Kompressionsrichtung der Balgfeder (1) verstellbar ist.

10. Einrichtung nach einem der Ansprüche 1 bis 9, dadurch **gekennzeichnet,** daß der Längslenker (7) um die erste Auslenkachse (12a) und eine erste Schwenkachse (12b), die senkrecht zur ersten Auslenkachse (12a) und zur Längsrichtung des Längslenkers (7) ist, oder daß der Querlenker (13) um die zweite Auslenkachse (14a) und eine zweite Schwenkachse (14b), die senkrecht zur zweiten Auslenkachse (14a) und zur Längsrichtung des Querlenkers (13) ist, verschwenkbar ist.

11. Einrichtung nach einem der Ansprüche 1 bis 10, dadurch **gekennzeichnet,** daß der Längslenker (7) und/oder der Querlenker (13) gelenkig an dem zweiten Ende (8) der Balgfeder (1) befestigt ist.

12. Einrichtung nach einem der Ansprüche 1 bis 11, dadurch **gekennzeichnet,** daß der Längslenker (7) und/oder der Querlenker (13) über eine weitere Balgfederhalterung (10) an dem zweiten Ende (8) der Balgfeder (1) befestigt ist.

13. Einrichtung nach einem der Ansprüche 1 bis 12, dadurch **gekennzeichnet,** daß die Auslenkvorrichtung (16) an dem einen der beiden Lenker (7 oder 13) angreift und den anderen der beiden Lenker (13 oder 7) über die Befestigungsstelle (10) der beiden Lenker (7, 13) an dem zweiten Ende (8) der Balgfeder (1) mitbewegt.

14. Einrichtung nach einem der Ansprüche 1 bis 13, dadurch **gekennzeichnet,** daß die Auslenkvorrichtung (16) gelenkig mit dem Längs- oder Querlenker (7 oder 13) verbunden ist.

15. Einrichtung nach einem der Ansprüche 1 bis 14, dadurch **gekennzeichnet,** daß die Position der Auslenkvorrichtung (16) längs des Lenkers (7 oder 13), an dem sie angreift, verstellbar ist.

16. Einrichtung nach einem der Ansprüche 1 bis 15, dadurch **gekennzeichnet,** daß die Auslenkvorrichtung (16) eine servohydraulische oder -pneumatische Kolben-Zylinder-Vorrichtung umfaßt oder ist, die an ihrem einen Ende (17) gelenkig mit dem Längs- oder Querlenker (7 oder 13) verbunden und an ihrem anderen Ende (18) gelenkig gelagert ist.

17. Einrichtung nach Anspruch 16, dadurch **gekennzeichnet,** daß die Position des anderen Endes (18) der Kolben-Zylinder-Vorrichtung (16) verstellbar ist.

18. Einrichtung nach Anspruch 17, dadurch **gekennzeichnet,** daß die Position des anderen Endes (18) der Kolben-Zylinder-Vorrichtung (16) in der Längsrichtung des Lenkers (7 oder 13) verstellbar ist.

19. Einrichtung nach einem der Ansprüche 1 bis 18, dadurch **gekennzeichnet,** daß eine Kraftmeßeinrichtung (5) an der Balgfeder (1), bevorzugt zwischen dem ersten Ende (3) der Balgfeder (1) und der zugehörigen Balgfederhalterung (2), angeordnet ist.

20. Einrichtung nach einem der Ansprüche 1 bis 19, dadurch **gekennzeichnet,** daß die Balgfeder (1) in einer Klimatisierungskammer (18) einschließbar ist, deren Temperatur (T) und/oder Luftfeuchtigkeit steuer- oder regelbar ist.

21. Einrichtung nach einem der Ansprüche 1 bis 20, **gekennzeichnet** durch eine Regeleinrichtung (24) zum Regeln des Dehnungs- oder Kompressionsgrads der Balgfeder (1) über deren Innendruck (P).

22. Einrichtung nach Anspruch 21, dadurch **gekennzeichnet,** daß die Regeleinrichtung ein Regelventil (24) ist, das in Abhängigkeit von dem jeweiligen Auslenkungsgrad (s) der Auslenkvorrichtung (16) regelbar ist.

23. Einrichtung nach Anspruch 20 und 22, dadurch **gekennzeichnet,** daß das Regelventil (24) in der Klimatisierungskammer (18) mit eingeschlossen ist.

24. Einrichtung nach einem der Ansprüche 1 bis 23, **gekennzeichnet** durch einen Steuerrechner (29) zum Ansteuern der Bewegungs- bzw. Auslenkvorrichtung (16) und/oder eines Temperaturreglers der Klimatisierungskammer (18) und dadurch zur Simulation von in Frequenz und Amplitude betriebsähnlichen Last- und Verformungsabläufen und Temperaturen (T) an der Balgfeder (1).

25. Einrichtung nach Anspruch 24, **gekennzeichnet** durch das Ansteuern mittels Standardprogramm, umfassend zeitliche Original-Belastungsabschnitte von dynamischen, quasistatischen und/oder statischen Belastungen und/oder Temperaturzyklen der Balgfeder (1).

26. Einrichtung nach einem der Ansprüche 1 bis 25, dadurch **gekennzeichnet,** daß zur Simulation und Regelung des Drucks (P) der Balgfeder (1) Original-Baugruppen und/oder -Steuerelemente vorgesehen sind.

27. Einrichtung nach einem der Ansprüche 1 bis 26, dadurch **gekennzeichnet,** daß der Längslenker (7) um ein erstes Kugelgelenk (12) und/oder der Querlenker (13) um ein zweites Kugelgelenk (14) verschwenkbar ist.

28. Einrichtung nach einem der Ansprüche 1 bis 27, dadurch **gekennzeichnet,** daß die gelenkige Befestigung der Auslenkvorrichtung (16) mit dem Längs- oder Querlenker (7 oder 13) und/oder mit dem Rahmen oder Gestell der Einrichtung jeweils ein Kugelgelenk ist oder umfaßt.

29. Verwendung der Einrichtung nach einem der Ansprüche 1 bis 28 zum Prüfen von Balgfedern für Kraftfahrzeuge und Kraftfahrzeuganhänger.

## Claims

1. Device for testing a component comprising a spring element with two ends under loading conditions similar to working ones, with
(a) a frame or bench,
(b) a holder attached to the frame or bench for holding the first end of the component,
(c) a clamping and guide apparatus for clamping the second end of the component and for positively guiding this along a non-linear inward and outward excursion path, and
(d) a movement apparatus for reciprocating the second end of the component along the non-linear inward and outward excursion path determined by the clamping and guide apparatus,
characterised in that the component comprising a spring element is a pneumatic spring and air bag (1) and the clamping and guide apparatus (7, 10, 13) comprises the following:
(1) a longitudinal control arm (7), which can be attached to the second end (8) of the pneumatic spring and air bag (1) and, for the purpose of extending the pneumatic spring and air bag (1), can be deflected about a first deflection axis (12a), which is at a predetermined first distance (l₁) from the second end (8) of the pneumatic spring and air bag (1); and
(2) a transverse control arm (13), which can also be attached to the second end (8) of the pneumatic spring and air bag (1) and, for the purpose of extending the pneumatic spring and air bag (1), can be deflected about a second deflection axis (14a), which is at a predetermined second distance (l₂) from the second end (8) of the pneumatic spring and air bag (1), wherein the deflection axes (12a, 14a) of the longitudinal and the transverse control arm (7, 13) are not parallel to one another;
wherein, moreover, the longitudinal control arm (7) and the transverse control arm (13) can each be deflected transversely, preferably perpendicularly to the plane defined by its movement about its deflection axis (12a and 14a, respectively), and wherein the movement apparatus is a deflection apparatus (16) for deflecting the longitudinal and the transverse control arm (7, 13) about their deflection axes (12a, 14a).

2. Device according to claim 1, characterised in that the position of the first or second deflection axis (12a, 14a) can be adjusted parallel or perpendicularly to the extension and compression direction of the pneumatic spring and air bag (1).

3. Device according to claim 1 or 2, characterised in that the first and/or second distance (l₁, l₂) is/are variable.

4. Device according to claim 1, 2 or 3, characterised in that the position of the pneumatic spring holder (2) can be adjusted.

5. Device according to one of claims 1 to 4,
characterised in that the deflection axis (12a) of the longitudinal control arm (7) extends perpendicularly to the extension and compression axis of the pneumatic spring and air bag (1).

6. Device according to one of claims 1 to 5,
characterised in that the deflection axis (14a) of the transverse control arm (13) extends perpendicularly to the extension and compression direction of the pneumatic spring and air bag (1).

7. Device according to one of claims 1 to 6,
characterised in that the first and the second deflection axis (12a, 14a) extend perpendicularly to one another.

8. Device according to one of claims 1 to 7,
characterised in that the position of the pneumatic spring holder (2) can be adjusted perpendicularly to the extension and compression direction of the pneumatic spring and air bag (1) and parallel to the deflection plane of the longitudinal control arm (7) or parallel to the deflection plane of the transverse control arm (13).

9. Device according to one of claims 1 to 8,
characterised in that the position of the pneumatic spring holder (2) can be adjusted in the extension and compression direction of the pneumatic spring and air bag (1).

10. Device according to one of claims 1 to 9,
characterised in that the longitudinal control arm (7) can be pivoted about the first deflection axis (12a) and a first pivot axis (12b), which is perpendicular to the first deflection axis (12a) and to the longitudinal direction of the longitudinal control arm (7), or that the transverse control arm (13) can be pivoted about the second deflection axis (14a) and a second pivot axis (14b), which is perpendicular to the second deflection axis (14a) and to the longitudinal direction of the transverse control arm (13).

11. Device according to one of claims 1 to 10,
characterised in that the longitudinal control arm (7) and/or the transverse control arm (13) is/are flexibly attached to the second end (8) of the pneumatic spring and air bag (1).

12. Device according to one of claims 1 to 11,
characterised in that the longitudinal control arm (7) and/or the transverse control arm (13) is/are attached to the second end (8) of the pneumatic spring and air bag (1) via another pneumatic spring holder (10).

13. Device according to one of claims 1 to 12,
characterised in that the deflection apparatus (16) acts on one of the two control arms (7 or 13), and the other of the two control arms (13 or 7) also moves via the attachment point (10) of the two control arms (7, 13) at the second end (8) of the pneumatic spring and air bag (1).

14. Device according to one of claims 1 to 13,
characterised in that the deflection apparatus (16) is flexibly connected to the longitudinal or transverse control arm (7 or 13).

15. Device according to one of claims 1 to 14,
characterised in that the position of the deflection apparatus (16) along the control arm (7 or 13), on which it acts, can be adjusted.

16. Device according to one of claims 1 to 15,
characterised in that the deflection apparatus (16) comprises or is a servo-hydraulic or servo-pneumatic piston-cylinder apparatus which is flexibly connected to the longitudinal or transverse control arm (7 or 13) at one end (17) and is flexibly mounted at its other end (18).

17. Device according to claim 16, characterised in that the position of the other end (18) of the piston-cylinder apparatus (16) can be adjusted.

18. Device according to claim 17, characterised in that the position of the other end (18) of the piston-cylinder apparatus (16) can be adjusted in the longitudinal direction of the control arm (7 or 13).

19. Device according to one of claims 1 to 18,
characterised in that a force measuring device (5) is disposed on the pneumatic spring and air bag (1), preferably between the first end (3) of the pneumatic spring and air bag (1) and the associated pneumatic spring holder (2).

20. Device according to one of claims 1 to 19,
characterised in that the pneumatic spring and air bag (1) can be enclosed in an air-conditioning chamber (18), the temperature (T) and/or air humidity of which can be controlled or regulated.

21. Device according to one of claims 1 to 20,
characterised by a regulating device (24) for regulating the degree of extension or compression of the pneumatic spring and air bag (1) via its internal pressure (P).

22. Device according to claim 21, characterised in that the regulating device is a regulating valve (24), which can be regulated in accordance with the respective degree of deflection (s) of the deflection apparatus (16).

23. Device according to claims 20 and 22, characterised in that the regulating valve (24) is also enclosed in the air-conditioning chamber (18).

24. Device according to one of claims 1 to 23,
characterised by a control computer (29) for controlling the movement or deflection apparatus (16) and/or a temperature regulator for the air-conditioning chamber (18) and thereby for simulating load and deformation processes similar to working ones in frequency and amplitude and temperatures (T) at the pneumatic spring and air bag (1).

25. Device according to claim 24, characterised by a control system by means of a standard program, comprising chronological original loading sections of dynamic, quasistatic and/or static loads and/or temperature cycles of the pneumatic spring and air bag (1).

26. Device according to one of claims 1 to 25,
characterised in that original assemblies and/or control elements are provided to simulate and regulate the pressure (P) of the pneumatic spring and air bag (1).

27. Device according to one of claims 1 to 26,
characterised in that the longitudinal control arm (7) can be pivoted about a first ball-and-socket joint (12) and/or the transverse control arm (13) about a second ball-and-socket joint (14).

28. Device according to one of claims 1 to 27,
characterised in that the flexible attachment of the deflection apparatus (16) to the longitudinal or transverse control arm (7 or 13) and/or to the frame or bench of the device in each case is or comprises a ball-and-socket joint.

29. Use of the device according to one of claims 1 to 28 for testing pneumatic springs for motor vehicles and motor vehicle trailers.

## Revendications

1. Dispositif pour tester un composant comprenant un élément de ressort et possédant deux extrémités, dans des conditions de contrainte semblables à celles intervenant dans le fonctionnement réel, comportant
(a) un cadre ou châssis,
(b) un dispositif de support fixé au cadre ou au châssis et servant à retenir la première extrémité du composant,
(c) un dispositif de serrage et de guidage pour le serrage de la seconde extrémité du composant et pour le guidage forcé de ce composant sur un trajet non linéaire de compression et de dilatation élastique; et
(d) un dispositif de déplacement servant à déplacer en va-et-vient la seconde extrémité du composant le long du trajet non-linéaire de compression et de dilatation élastique, fixé par le dispositif de serrage et de guidage,
caractérisé en ce que le composant comprenant un élément de ressort est un coussin d'air pneumatique (1) et que le dispositif de serrage et de guidage (7,10,13) comprend ce qui suit :
(1) un bras oscillant longitudinal (7), qui peut être fixé sur la seconde extrémité (8) du coussin d'air pneumatique (1) et peut être dévié, dans le sens d'une dilatation du coussin d'air pneumatique (1), autour d'un premier axe de déviation (12a), qui est séparé de la seconde extrémité (8) du coussin d'air pneumatique (1) par une première distance prédéterminée (l₁), et
(2) un bras oscillant transversal (13), qui peut être également fixé à la seconde extrémité (8) du coussin d'air pneumatique (1) et peut être dévié, dans le sens d'une dilatation du coussin d'air pneumatique (1) autour d'un second axe de déviation (14), qui est séparé de la seconde extrémité (8) du coussin d'air pneumatique (1) par une seconde distance prédéterminée (l₂), les axes de déviation (12a,14a) du bras oscillant longitudinal et du bras oscillant transversal (7,13) n'étant pas parallèles entre eux;
dans lequel en outre le bras oscillant longitudinal (7) et le bras oscillant transversal (13) peuvent être déviés respectivement transversalement, de préférence perpendiculairement, par rapport au plan défini par le déplacement de ce bras oscillant autour de son axe de déviation (12a ou 14a), et dans lequel le dispositif de déplacement est un dispositif de déviation (16) servant à faire dévier le bras oscillant longitudinal et le bras oscillant transversal (7,13) autour de leurs axes de déviation (12a,14a).

2. Dispositif selon la revendication 1, caractérisé en ce que la position des premier et second axes de déviation (12a,14a) est réglable parallèlement ou perpendiculairement à la direction de dilatation et de compression du coussin d'air pneumatique (1).

3. Dispositif selon la revendication 1 ou 2, caractérisé en ce que la première et/ou la seconde distance (l₁,l₂) peuvent être modifiées.

4. Dispositif selon la revendication 1, 2 ou 3, caractérisé en ce que la position du dispositif (2) de retenue du coussin d'air pneumatique est réglable.

5. Dispositif selon l'une des revendications 1 à 4, caractérisé en ce que l'axe de déviation (12a) du bras oscillant longitudinal (7) est perpendiculaire à l'axe de dilatation et de compression du coussin d'air pneumatique 11).

6. Dispositif selon l'une des revendications 1 à 5, caractérisé en ce que l'axe de déviation (14a) du bras oscillant transversal (13) est orienté perpendiculairement à la direction de dilatation et de compression du coussin d'air pneumatique (1).

7. Dispositif selon l'une des revendications 1 à 6, caractérisé en ce que les premier et second axes de déviation (12a,14a) sont orientés de manière à être perpendiculaires entre eux.

8. Dispositif selon l'une des revendications 1 à 7, caractérisé en ce que la position du dispositif (2) de retenue du coussin d'air pneumatique est réglable perpendiculairement à la direction de dilatation et de compression du coussin d'air pneumatique (1) et parallèlement au plan de déviation du bras oscillant longitudinal (7) ou parallèlement au plan de déviation du bras oscillant transversal (13).

9. Dispositif selon l'une des revendications 1 à 8, caractérisé en ce que la position du dispositif (2) de retenue du coussin d'air pneumatique est réglable dans la direction de dilatation et de compression du coussin d'air pneumatique (1).

10. Dispositif selon l'une des revendications 1 à 9, caractérisé en ce que le bras oscillant longitudinal (7) peut pivoter autour du premier axe de déviation (12a) et d'un premier axe de pivotement (12b), qui est perpendiculaire au premier axe de déviation (12a) et à la direction longitudinale du bras oscillant longitudinal(7), ou en ce que le bras oscillant transversal (13) peut pivoter autour du second axe de déviation (14a) et d'un second axe de pivotement (14b), qui est perpendiculaire au second axe de pivotement (14a) et à la direction longitudinale du bras oscillant transversal (13).

11. Dispositif selon l'une des revendications 1 à 10, caractérisé en ce que le bras oscillant longitudinal (7) et/ou le bras oscillant transversal (13) est fixé d'une manière articulée sur la seconde extrémité (8) du coussin d'air pneumatique (1).

12. Dispositif selon l'une des revendications 1 à 11, caractérisé en ce que le bras oscillant longitudinal (7) et/ou le bras oscillant transversal (13) sont fixés par l'intermédiaire d'un autre dispositif (10) de retenue du coussin d'air pneumatique, sur la seconde extrémité (8) du coussin d'air pneumatique (1).

13. Dispositif selon l'une des revendications 1 à 12,caractérisé en ce que le dispositif de déviation (16) est en prise avec l'un des deux bras oscillants (7 ou 13) et entraîne conjointement l'autre des deux bras oscillants (13 ou 7), par l'intermédiaire du point (10) de fixation des deux bras oscillants (7,13) sur la seconde extrémité (8) du coussin d'air pneumatique (1).

14. Dispositif selon l'une des revendications 1 à 13, caractérisé en ce que le dispositif de déviation (16) est relié d'une manière articulée au bras oscillant longitudinal ou transversal (7 ou 13).

15. Dispositif selon l'une des revendications 1 à 14, caractérisé en ce que la position du dispositif de déviation (16) est réglable le long du bras oscillant (7,13), auquel il est relié.

16. Dispositif selon l'une des revendications 1 0 15, caractérisé en ce que le dispositif de déviation (16) comprend ou est un dispositif à piston et cylindre servo-hydraulique ou pneumatique, qui est relié de façon articulée, par l'une de ses extrémités (17), au bras oscillant longitudinal ou transversal (7 ou 13) et est monté de façon articulée au niveau de son autre extrémité (18).

17. Dispositif selon la revendication 16, caractérisé en ce que la position de l'autre extrémité (18) du dispositif à piston et cylindre (16) est réglable.

18. Dispositif selon la revendication 17, caractérisé en ce que la position de l'autre extrémité (18) du dispositif à piston et cylindre (16) est réglable dans la direction longitudinale du bras oscillant (7 ou 13).

19. Dispositif selon l'une des revendications 1 à 18, caractérisé en ce qu'un dispositif de mesure dynamométrique (5) est monté sur le coussin d'air pneumatique (1) de préférence entre la première extrémité (3) du coussin d'air pneumatique (1) et le dispositif associé (2) de retenue du coussin d'air pneumatique.

20. Dispositif selon l'une des revendications 1 à 19, caractérisé en ce que le coussin d'air pneumatique (1) peut être inséré dans une chambre de climatisation (18), dont la température (T) et/ou l'humidité de l'air sont commandables ou réglables.

21. Dispositif selon l'une des revendications 1 à 20, caractérisé par un dispositif de régulation (24) servant à régler le degré de dilatation ou de compression du coussin d'air pneumatique (1), par l'intermédiaire de sa pression intérieure (P).

22. Dispositif selon la revendication 21, caractérisé en ce que le dispositif de régulation est une vanne de régulation (24), qui est réglable en fonction du degré respectif de déviation (s) du dispositif de déviation (16).

23. Dispositif selon les revendications 20 et 22, caractérisé en ce que la vanne de régulation (24) est insérée conjointement dans la chambre de climatisation (18).

24. Dispositif selon l'une des revendications 1 à 23, caractérisé par un calculateur de commande (29) servant à commander le dispositif de déplacement ou de déviation (16) et/ou un régulateur de température de la chambre de climatisation (18) et de ce fait pour simuler des cycles de charge et de déformation, qui simulent du point de vue fréquence et amplitude le fonctionnement réel, et des températures (T) au niveau du coussin d'air pneumatique (1).

25. Dispositif selon la revendication 24, caractérisé par le commande réalisée au moyen d'un programme standard, comprenant des intervalles de temps de charge d'origine avec des contraintes dynamiques, quasi-statiques et/ou statiques et/ou des cycles de température du coussin d'air pneumatique (1).

26. Dispositif selon l'une des revendications 1 à 25, caractérisé en ce que des modules et/ou des éléments de commande d'origine sont prévus pour la simulation et la régulation de la pression (P) du coussin d'air pneumatique (1).

27. Dispositif selon l'une des revendications 1 à 26, caractérisé en ce que le bras oscillant longitudinal (7) peut pivoter autour d'une première articulation sphérique (12) et/ou le bras oscillant transversal (13) peut pivoter autour d'une seconde articulation sphérique (14).

28. Dispositif selon l'une des revendications 1 à 27, caractérisé en ce que la fixation articulée du dispositif de déviation (16) comportant le bras oscillant ou le bras oscillant transversal (7 ou 13) et/ou le cadre ou châssis du dispositif, est ou comprend respectivement une articulation sphérique.

29. Utilisation du dispositif selon l'une des revendications 1 à 28 pour tester les coussins d'air pneumatiques pour véhicules automobiles et remorques de véhicules automobiles.
